## Europäisches Patentamt
## European Patent Office
## Office européen des brevets

(11) Veröffentlichungsnummer: **0 051 246**
**A1**

(12) # EUROPÄISCHE PATENTANMELDUNG

(21) Anmeldenummer: **81108953.1**

(22) Anmeldetag: **27.10.81**

(51) Int. Cl.³: **B 29 D 3/02**

(30) Priorität: **31.10.80 DE 3041020**
**15.01.81 DE 3101029**

(43) Veröffentlichungstag der Anmeldung:
**12.05.82 Patentblatt 82/19**

(84) Benannte Vertragsstaaten:
**AT BE CH DE FR GB IT LI LU NL SE**

(71) Anmelder: **Rudolf, A.**
**Biebelshofer Weg 2**
**D-5521 Hermesdorf/Waldbröl(DE)**

(72) Erfinder: **Rudolf, A.**
**Biebelshofer Weg 2**
**D-5521 Hermesdorf/Waldbröl(DE)**

(74) Vertreter: **Rieder, Hans-Joachim, Dr. et al,**
**Corneliusstrasse 45**
**D-5600 Wuppertal 11(DE)**

(54) Verfahren zur Herstellung faser-matten-verstärkter Kunststoff-Formteile.

(57) Die Erfindung betrifft ein Verfahren zur Herstellung faser-mattenverstärkter Kunststoff-Formteile und hat sich die Aufgabe gestellt, zur Erhöhung der Formteilfestigkeit und der Werkstoffhomogenität den Volumenanteil des Fasermateriales bis zum Optimum zu steigern, dies alles bei einfacher Durchführungsmöglichkeit und geringster Ausschußquote. Hierzu wird so vorgegangen, daß zunächst ein etwa dem Formteil entsprechend gestalteter Vorformling aus gepreßtem Fasermaterial dadurch hergestellt wird, daß einzelne, entsprechend geformte Mattenzuschnitte in eine Preßform aufeinandergelegt, nach etwa jeder zweiten oder dritten Lage einem die Faserbindepunkte der Matte erweichenden Mittel ausgesetzt werden, sodann der vollständige Mattenzuschnitt-Stapel auf einen Bruchteil seiner Dicke und in eine dem Formteil entsprechende Gestalt gepreßt wird unter Aufrechterhaltung des Preßdruckes bis zur erneuten Härtung der Faserbindepunkte, woran anschließend dieser Vorformling innerhalb einer Form mit Flüssigharz durchtränkt und umkleidet wird. Eine dem Schrumpfverhalten gerechtwerdende Fertigung ist durch den Einsatz einer außendruckbelasteten, elastischen Folienformwand (10) optimiert. Das die Faserbindepunkte erneut erweichende Flüssigharz wird im Zustand der Außendruckbelastung der Folienformwand (10) eingebracht. Es härtet dabei aus.

FIG. 1

## Verfahren zur Herstellung faser-matten-verstärkter Kunststoff-Formteile

Die Erfindung betrifft ein Verfahren zur Herstellung faser-matten-verstärkter Kunststoff-Formteile und hat sich die Aufgabe gestellt, zur Erhöhung der Formteilfestigkeit und der Werkstoffhomogenität den Volumenanteil des Fasermateriales bis zum Optimum zu steigern, dies alles bei einfacher Durchführungsmöglichkeit und geringster Ausschußquote.

Gelöst ist diese Aufgabe durch die im Kennzeichen des Hauptanspruches angegebenen Maßnahmen. Die Unteransprüche 2 bis 5 stellen vorteilhafte Weiterbildungen der Erfindung dar.

Zufolge dieser Lösung ist ein Verfahren zur Herstellung von faser-matten-verstärkten Kunststoff-Formteilen gegeben, welches Verfahren serienproduktions-geeignet und mit einfachst zu bedienenden Einrichtungen durchführbar ist. Es führt zu Formteilen mit größtmöglichem Volumenanteil am Faser-Matten-Material, seien es Glasfasermatten, Kohlenstoff-Fasermatten, oder dergleichen. Die spezielle Herstellung des Vorformlinges, bei welcher die Faser-Bindepunkte zweitweilig erweicht werden, ermöglicht ein hochgradiges Zusammendrücken des Mattenmateriales bei erheblicher Gestaltfestigkeit dieses Vorformlinges und sehr gleichmäßiger Oberfläche desselben, so daß aus der Oberfläche abstehende Faserabschnitte weitgehend nicht mehr auftreten. Der Bindergehalt im Vorformling ist relativ niedrig, was einer hohen und guten Tränkung mittels des Flüssigharzes zugutekommt. Die Kräfte zum Zusammendrücken des Mattenzuschnitt-Stapels sind sehr gering. Es sind nur Bruchteile von Kilogramm pro Quadratzentimeter notwendig. Vorformdicken von 1 bis 50 mm sind ohne Schwierigkeiten erreichbar und entsprechen je nach Fasergehalt einer Lagenzahl von 2 bis 3 und 120 bis 150. Die Festigkeit und Maßkonstanz ist sehr hoch. Erhebliche Genauigkeiten lassen sich, wie gefunden wurde, am einfachsten dadurch erzielen, daß man den Matten-Materialanteil in Relation zum Volumen des Formlings auswiegt. Der Vorformling entspricht genau dem Füllraum des zum Pressen des Mattenzuschnittstapels benutzten Ausformwerkzeuges. Die Vorförmlinge sind beliebig lagerfähig und können in einer besonderen Abteilung hergestellt werden. Als Flüssigharze können Polyester oder Epoxydharz verwendet sein. Mit der entsprechenden Technik sind ohne weiteres ein Fasergewichtsanteil von gut 60 % leicht erreichbar. Wegen des relativ geringen Volumenanteiles von Flüssigharz am Gesamtvolumen des Kunststoff-Formteiles ergibt sich auch eine geringere Schrumpfung. Der erhöhte Faseranteil und die erreichbare Homogenität des Werkstoffes erhöhen nicht nur die mechanischen Festigkeiten des Formteiles, sondern verbessern auch die elektrischen Eigenschaften. Der geringe Anteil an Flüssigharz ändert auch die thermischen Verhältnisse bei der Polymerisation positiv. Selbst bei großen Formteilen sind Rißbildungen oder durch Überhitzung unbrauchbare Produkte vermieden. Die Formteile erhalten absolut glatte gleichmäßige Oberflächen, da aus der Oberfläche des Formlings keine Einzelfaserenden vorstehen, die die Harzumkleidungsschicht durchsetzen könnten.

Der Weg, die Form zum Zeitpunkt der Flüssigharz-Eingabe in einer Kammer mit Unterdruck anzuordnen, fördert die Produktionsgeschwindigkeit und vor allem auch die Homogenität der erreichten Formteile. Die den Vorformling aufnehmende Form ist in einer Kammer untergebracht, in welcher ein relativ großer Unterdruck erzeugt werden kann. Das Flüssigharz wird durch einen Schlauch vom außerhalb befindlichen Vorratsgefäß der Form zugeführt. Das Vorratsgefäß besitzt ein Bodenventil, das erst nach dem Erreichen des einstellbaren Vakuums geöffnet wird. Demzufolge wird bei

- 3 -

dieser Vakuuminjektion das Harz an allen Frontabschnitten unter fast gleichen Druckverhältnissen gezogen. Alle Einflüsse des Fließwiderstandes sind verringert. Durch die Höhe des Vakuums wird generell der Fließwiderstand herabgesetzt. Das Harz muß nur in fast luftleere Räume eindringen. Das gilt für die Faserbündel und die Zwischenräume. Wird der Unterdruck weit herabgesetzt auf z. B. 3 bis 0,5 mb, so werden eingeschlossene Leerstellen automatisch aufgefüllt, auch wenn die Entlüftungsöffnungen von voreilendem Harz bereits geschlossen worden sind. Für die Bildung von Lufteinschlüssen steht nur noch ein Bruchteil von Ein- bis Zweitausendstel des Anfangsvolumens zur Verfügung. Die Füllung ist stets absolut fehlerlos. Die Füllzeit beträgt nur wenige Minuten. Die Tränkung der Faserbündel ist optimal. Zur Absicherung der Fehlerlosigkeit ist es zweckmäßig, den Harzansatz im Unterdruck von wenigen Millibar restlos zu entlüften. Das geschieht zweckmäßigerweise wie folgt: Das Füllgefäß wird in ein Vakuumgefäß gestellt und das Mischgut über ein Ablaufblech in einem dünnen Strahl zugeführt. Die Dampfblasenbildung erfolgt nur in dünner Schicht und führt nicht zum Kochen oder Überschwemmen des ganzen Ansatzes. Eine weitere Beschleunigung in der Durchführung des Verfahrens bringt der vorteilhafte Vorschlag, das Lösungsmittel, welches beim Bilden des Matten-Zuschnittstapels zwecks Lösung der Faserbindepunkte zugegeben wird, mittels eines Warmluftstromes zu verdampfen. Dadurch können die Preßzeiten beim Erzeugen des Vorformlinges erheblich herabgesetzt werden.

Anstelle eines aufgesprühten Lösungsmittels kann die Erweichung der Faserbindepunkte auch durch einen thermischen Vorgang, z. B. einen Heißluftstrom erzielt werden. Auch ist eine kombinierte Version möglich, z. B. dahingehend, daß dem Warmluftstrom ein Lösungsmittel zugesetzt wird.

Man kommt also, kurz zusammengefaßt, zu Formteilen mit größtmöglichem Volumenanteil an Faser-Matten-Material und entsprechend geringem Volumenanteil von Flüssigharz am Gesamtvolumen. Der wesentliche Vorteil hieraus beruht auf einer hohen Werkstoffhomogenität und der damit unmittelbar zusammenhängenden Formteilfestigkeit. Der geringe Flüssigharz-Volumenanteil ergibt einen nur geringen Schrumpfungsgrad.

Eine vorteilhafte Weiterbildung des erfindungsgemäßen Verfahrens dahingehend, daß eine dem Schrumpfverhalten des Flüssigharz-Volumenanteiles noch besser gerechtwerdende Fertigung möglich ist, ist in Anspruch 6 formuliert.

Hierdurch ist das -wenn auch durch den hohen Volumenanteil an Glasfasermaterial- geringe Schrumpfen im Sinne einer Restverdichtung in den End-Formprozeß einbezogen. Die außen-druckbelastete elastische Folienformwand wandert mit; sie drückt die Formlinge ansonsten zusätzlich gegeneinander. Dies kann über ein Luftpolster oder ein hydraulisches Medium geschehen. Die Folienformwand folgt der schrumpfbedingten Volumenverminderung. Der vorverdichtete Fasermatten-Vorformling wird dabei an die feste Formwand gepreßt, erfährt aber im Querschnitt keinerlei Formveränderung. Die aufzubringenden Drücke sind relativ niedrig. Sie liegen bei 0,2 bis 0,5 bar. Dieser Druck bleibt bei der Vakuum-Flüssigharz-Füllung aufrechterhalten und stört auch die Injektion insofern nicht, weil er vom Glaspaket durch die unzähligen Faserbindepunkte (aufgrund der sich kreuzenden Faserbündel) aufgefangen wird. Die Faserbindepunkte werden durch das eingesaugte Flüssigharz infolge der aufweichenden Wirkung gelöst und hierbei sogar noch etwas dichter aufeinandergepreßt. Es setzt also jetzt eine mehr oder weniger mechanische Pressung ein, die im Vorformling durch den Mattenbinder als Klebstoff vorgegeben ist. Das ist auch der Grund dafür, daß trotz unterschiedlicher Glaseingabe solcherart hergestellte Teile nach Entformung alle einen fast übereinstimmenden Wert des prozentualen Glasgewichtes aufweisen. Dabei wird die Dichte von der Gitterstruktur der Fasermaterialbündel bestimmt (Glasfaser, Kohlenstoffaser etc.). Sind die Vorformlinge z. B. geringer verdichtet und enthalten nur ca. 50 Prozent Glas des Teilgewichtes, so werden sie durch den Druck der elastischen Folienformwand weiter bis

Dr. R./P/G    17 278/326    19.10.1981

## -5-

auf 65 Prozent zusammengedrückt. Das Fasergitter bleibt konstant erhalten. Wesentliche Verschiebungen der Struktur können nicht stattfinden. Überraschend und von grundsätzlichem Vorteil ist dabei die Tatsache, daß die unter Druck stehende Folienformwand der Volumenverminderung durch die Kontraktion bei der Aushärtung folgt. Je nach Harzart und Rezeptur ist diesbezüglich eine Größenordnung von 6 bis 8 Prozent anzunehmen. Dieser Faktor würde sich bei Arbeiten mit einer starren Formwand nachteilig auswirken. Dieses Verfahren eignet sich äußerst vorteilhaft für die Herstellung von Hohlkörpern jeder Art und Größe. Da alle Faktoren einstell- und berechenbar sind, sind einer diesbezüglichen Technik praktisch keine Grenzen gesetzt. Vom einfachen Behälter bis zum Drucktank jeder gängigen Abmessung reicht die Palette ebenso wie bei offenen Behältern und sogar Rohren. Auch Formteile mit verschiedenen Wandstärken, Durchbrüchen und Aufbauten sind in dieser Weise herstellbar und erweitern den Einsatzbereich der Vorform- und Manteltechnik erheblich.

Dieses Verfahren wird nachstehend anhand von Zeichnungen näher erläutert, und zwar speziell an Verbindungsfugen, wie sie bspw. im Behälterbau auftreten, dann natürlich in einem zeichnerisch nicht wiedergegebenen Krümmungsverlauf. Es zeigt:

Fig. 1 die Verbindung von Vorformlingen im Bereich einer einfachen Schäftung, unter vereinfachter Wiedergabe des Formwerkzeuges,

Fig. 1a eine schematische Herausvergrößerung der Verbindungsfläche unter Hervorhebung der den Verbund begünstigenden natürlichen Flächenrauhung,

Fig. 2 die Verbindung von Formlingen in Form einer durchgehenden Matte, in der Mitte aneinanderstoßender Matten sowie einer die Stoßstelle überfangenden Verstärkung,

Fig. 3 die Verbindung von in der Mitte stumpf gegeneinanderstoßender Formlinge bei beidseitig der Stoßfuge vorgesehenen schmalen Verstärkungen und

Fig. 4 in gegenüber Fig. 1 vergrößertem Maßstab zwei miteinander verbundene Formlinge, wobei in der Verbindungsfuge eine quer zur Erstreckungsrichtung der Matten liegende Verzahnung vorgesehen ist.

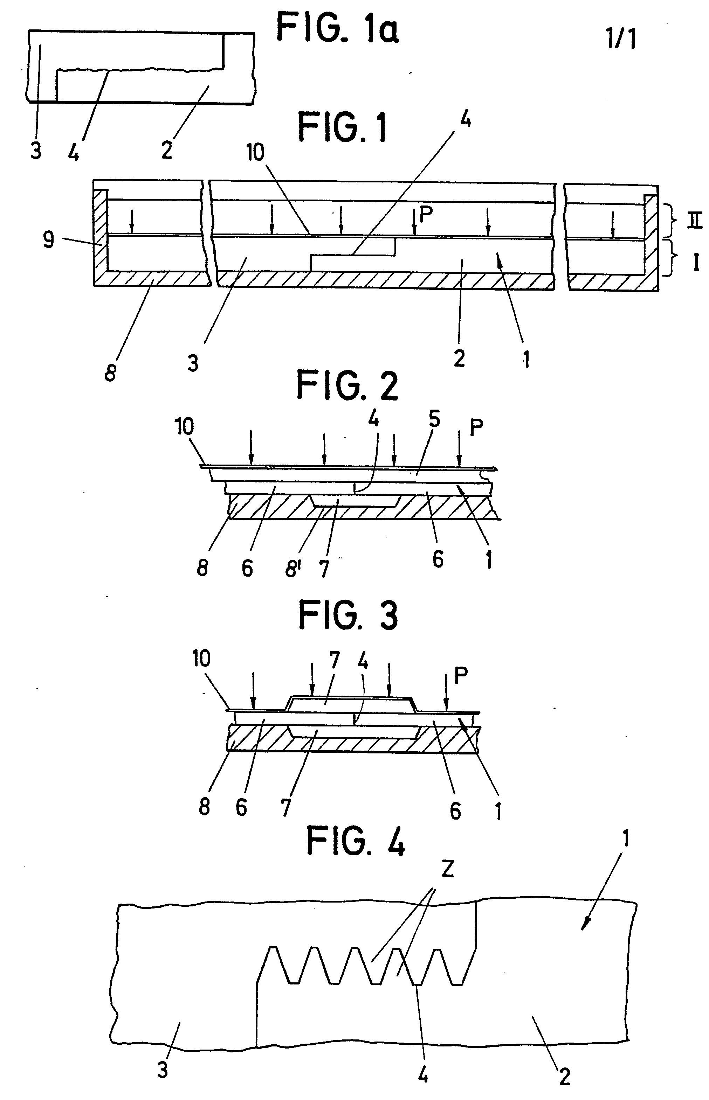

Zur Herstellung eines faser-matten-verstärkten Kunststoffkörpers
wird ein etwa dem Formteil entsprechend gestalteter Vorformling
aus Fasermattenmaterial hergestellt. Beim Ausführungsbeispiel
gemäß Fig. 1 besteht der entsprechende Vorformling 1 aus zwei
miteinander zu verbindenden Fasermatten 2, 3. Diese sind im
Bereich der Verbindungsfuge 4 im Wege einer einfachen Schäftung
aufeinandergelegt. Auf diese Art lassen sich z. B. Behälterwände
miteinander verbinden.

Beim Ausführungsbeispiel gemäß Fig. 2 besteht der Vorformling 1
aus einer obenliegenden, durchgehenden Fasermatte 5, zwei in der
Mitte stumpf gegeneinanderstoßenden Fasermatten 6 und einer
schmalen Verstärkung aus Fasermattenmaterial 7.

Fig. 3 ist insoweit demgegenüber abgewandelt, als dort statt einer
obenliegenden durchgehenden Fasermatte eine dem Fasermattenmaterial 7 entsprechende zweite Verstärkung den Bereich der Verbindungsfuge 4 abdeckt.

Das verwendete Formwerkzeug besteht aus einer festen Formwand
8, die sich allseitig in eine nach oben gerichtete Randwand 9
fortsetzt und einer obenliegenden Folienformwand 10. Zunächst
werden mehrere Vorformlinge 1 in Anpassung an die Gesamtform
des zu erstellenden Kunststoffkörpers in flächiger Berührung
zueinander in die Form gelegt. Beim Ausführungsbeispiel gemäß
Fig. 1 ergibt sich die flächige Berührung im Bereich der Z-förmigen Verbindungsfuge 4, bei den übrigen Ausgestaltungen hingegen in Form einer durchgehenden Übereinanderlage, zusammen mit der dortigen Stoßfuge 4. Die feste, bodenseitige Formwand 8 weist unter Berücksichtigung der Gesamtform des zu erstellenden Kunststoffkörpers bodenseitig eine Ausnehmung 8' auf, welche der Form des die Verstärkung bildenden Fasermattenmateriales 7 entspricht. Bevor die Fasermatten 2 und 3 bzw. 5 bis 7 in die dargestellte Form eingebracht werden, sind sie in der im Hauptpatent geschilderten Weise vorbereitet, d. h., daß einzelne, entsprechend geformte Mattenzuschnitte in einer Preßform aufeinandergelegt, nach etwa jeder zweiten oder dritten Lage einen die Faserbindepunkte der Matte erweichenden Mittel ausgesetzt werden. Danach wird der vollständige Mattenzuschnitt-Stapel auf einen Bruchteil seiner Dicke und in eine dem zu schaffenden Formteil entsprechende Gestalt gepreßt. Dies kann schon, bezogen bspw. auf Fig. 2 oder 3 des Ausführungsbeispieles, den Vorformling 1 ergeben.

Dieser Vorformling 1 wird in die Form 8/10 eingebracht. Es erfolgt das Durchtränken des Vorformlings mit Flüssigharz. Zu diesem Zeitpunkt befindet sich die Form in einer Kammer mit Unterdruck. Die wirksame Unterdruck-Zone, in Fig. 1 mit I bezeichnet, beschränkt sich auf das Glaspaket. Die Verteilung an Flüssigkeit ist homogen und führt zur Evakuierung etwaiger Luftanteile, wie dies im Hauptpatent im einzelnen beschrieben ist.

Einhergehend mit diesem Verfahrensschritt ergibt sich eine erneute Erweichung der Faserbindepunkte mit dem Nebeneffekt einer weiteren Verdichtung und relativen Erhöhung des Glasfaser-Volumenanteils. All dies geschieht im Zustand der Außendruckbelastung über die Folienformwand 10 (vergl. Pfeile P). Die erforderlichen Drücke in der Außendruckzone II (Fig. 1) liegen bei 0,2 bis 0,5 bar. Der Druck wird bei Einbringung des Flüssigharzes aufrechterhalten, da keinerlei nachteilige Einflüsse in Bezug auf die Formgebung beobachtet wurden. Verantwortlich hierfür ist, daß das Glaspaket durch die Bindepunkte bzw. Kreuzungspunkte der einzelnen Faserbündel in sich als stabile, im übertragenen Sinne knöcherne Grundstellung aufrechterhalten bleibt.

Es entsteht ein völlig homogener Körper mit extrem niedrigem Volumenanteil an Flüssigharz. Nach Abschluß der Tränkung wird die Druckbelastung der elastischen Folienformwand 10 aufrechterhalten. Sie folgt somit auch der Volumenminderung durch die Kontraktion bei der Aushärtung.

Die der Folienformwand 10 zugekehrte Fläche ist allenfalls schwach wellig, und zwar hervorgerufen durch die Härtungsschrumpfung, die naturgemäß nicht absolut gleichzeitig in allen Regionen gleich erfolgt. Wie Schnitte ergaben, nimmt die Welligkeit aber nach der starren Formwand hin ständig ab bis hin zu der formgebenden Glättung.

Durch die leichte Bearbeitbarkeit der Vorformlinge kann die Verbindungsfuge, d. h. die parallel zum Formboden verlaufende Fläche in Form der aus Fig. 4 ersichtlichen Verzahnung Z ausgebildet werden. Dort ist eine trapezförmige Zahnform wiedergegeben. Es ist selbsterklärlich, daß diese auch sägezahnförmig ausgebildet sein kann, so daß eine in Zugrichtung liegende Zahnflanken-Sperrabstützung nutzbar ist.

Die natürliche Rauhung ist in Fig. 1a im Bereich der Fuge 4 gezeigt. Sie bringt einen kräuselartigen Flächenineinandergriff, der zu hohen Festigkeitswerten führt.

Alle in der Beschreibung erwähnten und in der Zeichnung dargestellten neuen Merkmale sind erfindungswesentlich, auch soweit sie in den Ansprüchen nicht ausdrücklich beansprucht sind.

Patentansprüche

1. Verfahren zur Herstellung faser-matten-verstärkter Kunststoff-Formteile, dadurch gekennzeichnet, daß zunächst ein etwa dem Formteil gestalteter Vorformling aus gepreßtem Fasermattenmaterial dadurch hergestellt wird, daß einzelne, entsprechend geformte Mattenzuschnitte in eine Preßform aufeinandergelegt, nach etwa jeder zweiten oder dritten Lage einem die Faserbindepunkte der Matte erweichenden Mittel ausgesetzt werden, sodann der vollständige Mattenzuschnitt-Stapel auf einen Bruchteil seiner Dicke und in eine dem Formteil entsprechende Gestalt gepreßt wird unter Aufrechterhaltung des Preßdruckes bis zur erneuten Härtung der Faserbindepunkte, woran anschließend dieser Vorformling innerhalb einer Form mit Flüssigharz durchtränkt und umkleidet wird.

2. Verfahren nach Anspruch 1, dadurch gekennzeichnet, daß die Faserbindepunkte mittels eines eingesprühten verdampfungsfähigen Lösungsmittels erweicht werden.

3. Verfahren nach Anspruch 1, dadurch gekennzeichnet, daß die Form zum Zeitpunkt der Flüssigharz-Eingabe in einer Kammer mit Unterdruck angeordnet ist.

4. Verfahren nach Anspruch 1, dadurch gekennzeichnet, daß das Flüssigharz vor Eingabe in die Form bis auf wenige Millibar entlüftet wird.

5. Verfahren nach Anspruch 1, dadurch gekennzeichnet, daß die Verdampfung des Lösungsmittels durch einen den Preßstapel durchdringenden Warmluftstrom beschleunigt wird.

6. Verfahren nach Anspruch 1, dadurch gekennzeichnet, daß mehrere Vorformlinge (1) in Anpassung an die Gesamtform des Kunststoffkörpers und flächiger Berührung zueinander in die Form gelegt und mittels einer außen-druckbelasteten, elastischen Folienformwand (10) aufeinandergedrückt werden und das die Faserbindepunkte erneut erweichende Flüssigharz im Zustand der Außen-

0051246

- 10 -

druckbelastung der Folienformwand (10) eingebracht wird und
aushärtet.

- 10 -

Dr. R./P/G    17 278/326    19.10.1981

FIG. 1a

FIG. 1

FIG. 2

FIG. 3

FIG. 4

0051246

Nummer der Anmeldung

**Europäisches Patentamt**

**EUROPÄISCHER RECHERCHENBERICHT**

EP 81 10 8953

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl³) |
|---|---|---|---|
| X | GB - A - 871 117 (C. FREUDENBERG) <br> * Insgesamt und insbesondere Seite 2, Zeilen 42-53, 85-92; Ansprüche 14,15 * <br> -- | 1,2 | B 29 D 3/02 |
| | FR - A - 1 008 758 (SAINT-GOBAIN) <br> * Insgesamt * <br> -- | 1,2,5 | |
| | FR - A - 2 098 395 (SECRETAIRE D'ETAT A LA DEFENSE DU ROYAUME-UNI) <br> * Insgesamt und insbesondere Seite 2, Zeile 38 - Seite 3, Zeile 31 * <br> & DE - A - 2 135 181 <br> -- | 1 | RECHERCHIERTE SACHGEBIETE (Int. Cl³) <br><br> B 29 D 3/00 |
| | FR - A - 2 234 130 (N.I. KAMOV) <br> * Insgesamt * <br> -- | 1,6 | |
| | US - A - 3 666 600 (S.Y. YOSHINO) <br> * Insgesamt * <br> -- | 2,5,6 | |
| | DE - A - 2 443 726 (HELIOS) <br> * Seite 5, Absatz 1 - Seite 6, Absatz 1; Figur 1 * <br> -- | 3 | |
| | DE - A - 2 016 479 (HALMATIC) <br> * Insgesamt * <br> -- ./. | 4 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-01-1982 | LABEEUW |

EPA form 1503.1   06.78

**Europäisches Patentamt**

## EUROPÄISCHER RECHERCHENBERICHT

Nummer der Anmeldung

EP 81 10 8953

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | US - A - 4 132 755 (J. JOHNSON) <br> * Insgesamt * <br> -- | 6 | |
| | CH - A - 525 757 (SIEMENS) <br> * Insgesamt * <br> -- | 6 | |
| | DE - A - 2 622 163 (MESSERSCHMITT) <br> * Insgesamt * <br> -- | 6 | |
| | US - A - 4 065 340 (G.E. DICKERSON) <br> * Insgesamt * <br> -- | 6 | |
| A | US - A - 3 074 111 (A.J. WILTSHIRE) | | |
| A | FR - A - 2 297 705 (R. WIMMER) <br> ----- | | RECHERCHIERTE SACHGEBIETE (Int. Cl.³) |